(19) Europäisches Patentamt
European Patent Office
Office européen des brevets

(11) **EP 2 258 659 B1**

(12) **EUROPÄISCHE PATENTSCHRIFT**

(45) Veröffentlichungstag und Bekanntmachung des Hinweises auf die Patenterteilung:
**07.10.2015   Patentblatt 2015/41**

(51) Int Cl.:
***C01F 7/44*** *(2006.01)*      ***C01F 7/02*** *(2006.01)*

(21) Anmeldenummer: **10012099.7**

(22) Anmeldetag: **05.08.1999**

(54) **Böhmitische Tonerden und aus diesen erhältliche hochtemperaturstabile und hochporöse Aluminiumoxide**

BOEHMITIC ALUMINAS, AND HIGH-TEMPERATURE STABILE AND HIGHLY POROUS ALUMINUM OXIDES IN A PURE PHASE WHICH ARE OBTAINED THEREFROM

ALUMINES A BOEHMITE ET OXYDES D'ALUMINIUM A PHASES PURES, STABLES AUX TEMPERATURES ELEVEES ET FORTEMENT POREUSES POUVANT ETRE OBTENUES A PARTIR DE CES ALUMINES

(84) Benannte Vertragsstaaten:
**AT BE CH CY DE DK ES FI FR GB GR IE IT LI LU MC NL PT SE**

(30) Priorität: **14.08.1998   DE 19836821**

(43) Veröffentlichungstag der Anmeldung:
**08.12.2010   Patentblatt 2010/49**

(62) Dokumentnummer(n) der früheren Anmeldung(en) nach Art. 76 EPÜ:
**99952321.0 / 1 025 045**

(73) Patentinhaber: **SASOL Germany GmbH**
**20537 Hamburg (DE)**

(72) Erfinder:
• **Glöckler, Reiner**
  **25693 St. Michaelisdonn (DE)**

• **Noweck, Klaus**
  **25541 Brunsbüttel (DE)**
• **Meyer, Arnold**
  **25693 St. Michaelisdonn (DE)**
• **Bohnen, Frank Michael**
  **67574 Osthofen (DE)**
• **Juhl, Jens**
  **. (DE)**
• **Schimanski, Jürgen**
  **25541 Brunsbüttel (DE)**

(74) Vertreter: **Müller Schupfner & Partner**
**Patent- und Rechtsanwaltspartnerschaft mbB**
**Schellerdamm 19**
**21079 Hamburg (DE)**

(56) Entgegenhaltungen:
**EP-A- 0 514 229     US-A- 4 055 509**
**US-A- 4 061 594     US-A- 4 797 139**

EP 2 258 659 B1

**Beschreibung**

Die Erfindung betrifft kristalline böhmitische Tonerden, deren Kristallite ungewöhnliche Differenzen der Abmessungen in den Raumrichtungen 020 und 120 aufweisen, ein Verfahren zur ihrer Herstellung sowie aus diesen durch Calcinieren erhältliche Folgeprodukte.

Die Strukturbeziehungen der unterschiedlichen Aluminiumoxide und -hydroxide ist sehr komplex. Man unterscheidet im wesentlichen zwischen $\alpha$-Al$_2$O$_3$ (Korund), $\alpha$-AlO(OH) (Diaspor), $\alpha$-Al(OH)$_3$ (gelegentlich auch als $\beta$-Al(OH)$_3$ bezeichnet, Bayerit oder Bauxit-Dihydrat), $\gamma$-Al$_2$O$_3$, $\gamma$-AlO(OH) (Böhmit) und $\gamma$-Al(OH)$_3$ (gelegentlich auch als $\alpha$-Al(OH)$_3$ bezeichnet, Gibbsit, Hydrargillit). Daneben existieren noch eine Vielzahl anderer Modifikationen, insbesondere Modifikationen unterschiedlicher Aluminiumoxide, die durch thermischen Abbau der Aluminiumhydroxide oder Aluminiumoxidhydrate erhältlich sind. Es wird z.B. allgemein angenommen, daß sich böhmitische Tonerde unter Temperatureinfluß wie folgt umwandelt:

$$\text{Böhmit} \rightarrow \gamma(\text{gamma}) - Al_2O_3 \rightarrow \delta(\text{delta}) - Al_2O_3 \rightarrow \theta(\text{theta}) - Al_2O_3 \rightarrow \alpha(\text{alpha}) - Al_2O_3$$

Die unterschiedlichen Aluminiumoxide, Aluminiumoxidhydrate (teilweise auch als Aluminiumoxidhydroxide bezeichnet) und Aluminiumhydroxide werden in der Literatur insbesondere hinsichtlich der vorangestellten griechischen Buchstaben nicht einheitlich bezeichnet. Unter böhmitischen Tonerden im Sinne der Erfindung werden böhmitische und pseudo-böhmitische Tonerden verstanden.

Böhmitische Tonerden sind bekannt. Hochreine böhmitische Tonerden sind z.B. durch kontrollierte Hydrolyse von Aluminiumalkoxiden erhältlich. Hierbei werden Aluminiumhydroxid - Hydrogele erhalten, die z.B. in Form des rhombisch kristallinen Aluminiumoxidhydrats ($\gamma$-AlO(OH) ,böhmitische Tonerde) kristallisieren.

Die DE 38 23 895-C1 offenbart ein Verfahren zur Herstellung von böhmitischen Tonerden mit im Bereich von 3 bis 100 nm kontrolliert einstellbaren Porenradien. Nach diesem Verfahren werden die böhmitischen Tonerden einer hydrothermalen Alterung bei einem Wasserdampfdruck von 1 bis 30 bar entsprechend einer Temperatur von 100 bis 235°C für einen Zeitraum von 0,5 bis 20 h unter Rühren mit einer Umfangsgeschwindigkeit von 1 bis 6 s$^{-1}$ unterzogen. Diese Tonerden sowie die nach anderen Verfahren erhältlichen böhmitischen Tonerden weisen eine Kristallitgröße gemessen am 020 - Reflex auf, die stets um mindestens 2 nm kleiner ist als die Kristallitgröße gemessen am 120 - Reflex. Auch in der US 3,898,322 wird ein Verfahren zur Herstellung hydrothermal gealterter "Alumina-Aufschlämmung" beschrieben. Hierbei wird die wäßrige Aluminiumhydroxid/Aluminiumoxidhydrat-Aufschlämmung, wie sie aus der Hydrolyse von Aluminiumalkoxiden erhältlich ist, einer hydrothermalen Alterung bei Raumtemperatur über 2 bis 60 h ausgesetzt.

Die US 4061594 A offenbart "Tonerde basierte Substanzen", die durch hydrothermale Alterung von Tonerde in Gegenwart von Oxiden aus La, Nd, Pr und Th erhalten wurden, wobei die Tonerde durch teilweise Dehydratisierung von Hydrargillit oder "Alumina-Gel" erhalten wurde. Die US 4061594 beschreibt die Behandlung von gamma-Tonerde mit Metalloxiden, während bei der vorliegenden Erfindung die Tonerde in der Böhmit-/Pseuudoböhmit-Phase zusammen mit den beanspruchten Metalloxiden vorliegen muss.

Die US 4797139 A beschreibt die hydrothermale Phasenumwandlung von Aluminiumoxid-Trihydrat (Hydrargillit bzw. Bayerit) in Böhmit, fakultativ in Anwesenheit einer Saat. Die in ausgesprochener Mindermenge vorhandene Saat kann ein Böhmit sein. Dieser Böhmit dient als Impfkristall. Es ist der Zusatz eines "Zirkoniumoxidvorläufers" vor der Alterung als Option vorgesehen, es wird aber nicht offenbart, dass Böhmit neben Zirkoniumoxid eingesetzt wird, geschweige denn, welchen Einfluss das Zirkoniumoxid auf die Kristallitgröße des Böhmits hat. Auch sind die Alterungsbedingungen andere.

Aufgabe der Erfindung ist es, böhmitische und/oder pseudo-böhmitische Tonerden ungewöhnlicher Morphologie zugänglich zu machen. Weiterhin ist es Aufgabe der Erfindung, ungewöhnlich hochtemperaturstabile Aluminiumoxide bereitzustellen, die zudem nach entsprechender Calcinierung ungewöhnlich große Oberflächen und große Porenvolumina aufweisen.

Die Aufgabe der Erfindung wird gelöst durch kristalline böhmitische und/oder pseudo-böhmitische Tonerde, deren Kristallitgröße bestimmt am 020 - Reflex in nm größer als die um 1,5 nm, vorzugsweise um 0,5 nm, verminderte, gemessene Kristallitgröße bestimmt am 120 - Reflex ist, enthaltend Oxide oder Oxidhydrate des Zirkoniums, Titans, Lanthans und/oder Bors. Besonders bevorzugt ist die Kristallitgröße bestimmt am 020-Reflex in nm größer als die Kristallitgröße bestimmt am 120 - Reflex in nm.

Gegenstand der Erfindung ist weiterhin ein Verfahren zur Herstellung der erfindungsgemäßen kristallinen böhmitischen und/oder pseudo-böhmitischen Tonerde.

Die Ausgangsverbindung zur Herstellung der erfindungsgemäßen kristallinen böhmitischen und/oder pseudo-böhmitischen Tonerden sind herkömmliche pseudo-böhmitische und/oder böhmitische Tonerden. Wird die böhmitische und/oder pseudo-böhmitische Tonerde nicht hergestellt und unmittelbar, z.B. als Hydrogel, eingesetzt, werden die böhmitischen und/oder pseudo-böhmitischen Tonerden vor der erfindungsgemäßen Alterung vorzugsweise einem Mahlprozeß unterworfen.

Die Ausgangsverbindungen sind vorzugsweise durch Hydrolyse von Aluminiumalkoxiden von C1 bis C24+ Alkoholen oder deren Gemischen zugängliche Aluminiumoxidhydrate (bzw. Aluminiumoxidhydroxide). Die Aluminiumalkoxide können z.B. nach dem Ziegler-Verfahren hergestellt sein. Die Aluminiumalkoxide werden in einer wäßrigen Umgebung hydrolysiert. Die Hydrolyse kann allgemein in einem Temperaturbereich von 30 bis 150°C und vorzugsweise bei 60 bis 100°C durchgeführt werden. Hiernach trennt man die gebildete Aluminiumoxidhydrat-Aufschlämmung von der wäßrigen Alkoholphäse ab. Die Tonerde- / Wasserphase kann z.B. Tonerdehydrat mit einem $Al_2O_3$-Gehalt von 5 bis 12 Gew.%, vorzugsweise 10 bis 11 Gew.% $Al_2O_3$ enthalten.

Die erfindungsgemäßen kristallinen böhmitischen und/oder pseudo-böhmitischen Tonerden lassen sich durch eine hydrothermale Langzeitalterung in Gegenwart von Wasser und Oxiden oder Oxidhydraten des Zirkoniums, Titans, Lanthans und/oder Bors bei 40 bis 240°C, vorzugsweise 70°C bis 160 °C, für zumindest 8 h, vorzugsweise 16 h bis 170 h, besonders bevorzugt 32 h bis 170 h, herstellen.

Exemplarisch seien $ZrO_2$, $TiO_2$ und $B_2O_3$ genannt. Der Zusatz der Oxide erfolgt in Mengen von 0,1 bis 5 Gew.%, vorzugsweise 0,2 bis 2 Gew.%, jeweils bezogen auf $Al_2O_3$ .

Nach einer Ausgestaltung sind die erfindungsgemäßen kristallinen böhmitischen und/oder pseudo-böhmitischen Tonerden oder die hieraus erhältlichen Aluminiumoxide frei von Fremdatomen, insbesondere anderen Metallatomen (einschließlich Silizium und Phosphor), d.h. sie bestehen zu größer 99 Atom%, vorzugsweise zu größer 99,9 Atom%, ausschließlich aus Aluminium, Sauerstoff, Zirkonium, Lanthan, Bor, Titanium und/oder Wasserstoff.

Vorzugsweise weisen die nach obigem Verfahren hergestellten erfindungsgemäßen kristallinen böhmitischen und/oder pseudo-böhmitischen Tonerden unabhängig voneinander die folgenden Eigenschaften auf: Porenvolumina von größer 0,7 cm$^3$/g, vorzugsweise von größer 0,9 cm$^3$/g, Kritallitgrößen bestimmt am 020 Reflex von etwa 6 bis 10 nm, und Oberflächen von größer 200 m$^2$.

Gegenstand der Erfindung sind weiterhin aus den erfindungsgemäßen kristallinen Tonerden durch eine Temperaturbehandlung über 150°C, vorzugsweise durch Calcinieren bei einer Temperatur von 800 bis 1500°C für zumindest 0,5 h, zugängliche Aluminiumoxide. Diese Aluminiumoxide zeichnen sich durch besonders große Oberflächen, großen Porenvolumina und hervorragende Hochtemperaturstabilität aus. Temperaturstabil heißt stabil gegenüber durch äußere Einflüsse wie Wasser, Chemikalien, Druck oder mechanische Beanspruchung und Temperatur auf der anderen Seite hervorrufbare Veränderungen in der Oberfläche und kristallinen Phase.

Weiterhin sind die erfindungsgemäßen Aluminiumoxidhydrate und Aluminiumoxide phasenrein und phasenstabil und liegen je nach Calcinierungstemperatur und Dauer in der Delta-, Theta- oder Alpha- Modifikation vor. In diesem Zusammenhang wird auf die Tabellen 1, 2 und 3 verwiesen, in denen Pulverdiffraktogramm-Daten der unterschiedlichen erfindungsgemäßen Aluminiumoxide wiedergegeben sind.

Phasenrein im Sinne der Erfindung heißt, daß das kristalline Aluminiumoxid zu größer 90 Gew.%, vorzugsweise zu größer 98 Gew. % - bestimmt mit Hilfe eines Röntgenpulverdiffraktogrammes - aus nur einer Phase besteht. Die erfindungsgemäßen Theta-Aluminiumoxide liegen phasenrein vor, wenn insbesondere in den unten in A angegebenen d-Wert-Bereichen keine für $\alpha$-$Al_2O_3$ charakteristischen Peaks im Röntgenpulverdiffraktogramm vorliegen.

Hinsichtlich der Pulverröntgendiffraktogramm-Daten konventioneller Aluminiumoxide kann auf die entsprechenden JCPDS-Karten (U.S. National Bureau of Standards) für Korund ($\alpha$-$Al_2O_3$), Delta- und Theta-Aluminiumoxid verwiesen werden.

Phasenstabil im Sinne der Erfindung heißt, daß sich die kristalline Phase auch unter Einfluß einer langanhaltenden Temperaturbehandlung bei oder unterhalb der Temperatur, die bei der Herstellung dieses Aluminiumoxides durch Calcinierung verwendet wurde, nicht verändert.

Weiterhin sind die erfindungsgemäßen Aluminiumoxide temperaturstabil und weisen im Unterschied zu herkömmlichen Aluminiumoxiden auch nach einer Temperaturbehandlung durch Calcinierung bei 1200°C über 3 h noch eine Oberfläche von größer 60 m$^2$/g, vorzugsweise größer 70 m$^2$/g, auf. Die Calcinierung wird in einer Luft-Atmosphäre im Muffelofen durchgeführt.

Die erfindungsgemäßen Aluminiumoxide weisen weiterhin Porenvolumina bestimmt mit Hilfe der Quecksilberpenetrationsmethode (nach DIN 66 133) im Porenradienbereich von 1,8 bis 100 nm von größer 0,6 cm$^3$/g, vorzugsweise von 0,7 bis 1 cm$^3$/g, auf. Diese Eigenschaft bleibt auch nach einer Temperaturbehandlung der erfindungsgemäßen Aluminiumoxide bei 1100°C über 24h erhalten. Konventionelle Aluminiumoxide, die etwa durch Calcinieren von Bayerit zugänglich sind, weisen wesentlich geringere Porenvolumina auf (etwa 0,2 bis 0,4 cm$^3$/g).

Die erfindungsgemäßen Aluminiumoxide eignen sich hervorragend als Katalysator oder Katalysatorträgermaterial, insbesondere als Katalysatorträgermaterial für Autoabgaskatalysatoren. In diesem Fall ist das Katalysatorträgermaterial mit EdelmetallKatalysatoren wie Platin oder Palladium behandelt.

Bei Verwendung der erfindungsgemäßen Aluminiumoxide ist es möglich, den Katalysator bzw. den Katalysatorträger in dünnen und auch unter hoher Temperaturbelastung , z.B. über 1000°C , stabilen Schichten einzusetzen. Dies ist z.B. für Abgaskatalysatoren von großem Vorteil. Weiterhin kann in vielen Fällen auf die in der Technik eingesetzten Stabilisierungshilfen, wie etwa Lanthanoxide oder $SiO_2$ , verzichtet werden. Stabilisierungshilfen aus Metalloxiden können das katalytische Verhalten des $Al_2O_3$- Katalysators bzw. Katalysatorträgers negativ beeinflussen.

Die Ermittlung der Kristallitgrößen der erfindungsgemäßen böhmitischen Tonerden erfolgte am 120 - und 020 - Reflex über die allgemeine Scherrer-Formel:

$$\text{Kristallitgröße} = (K \times Lambda \times 57{,}3)/(Beta \times cos\ Theta)$$

| | |
|---|---|
| K (Formfaktor): | 0,992 |
| Lambda (Wellenlänge der Röntgenstrahlung): | 0,154 nm |
| Beta (korrigierte apparative Linienverbreiterung): | reflexabhängig |
| Theta : | reflexabhängig |

Die Messungen wurden an einem XRD-Gerät der Firma Philips Typ X'pert durchgeführt. Die Meßparameter der Messungen der Proben nach Beispiel 1 (Vergleichsbeispiel) und nach Beispiel 2 sind in Tabelle 1 bzw. Tabelle 2 wiedergegeben.

Die Reflexe 120 und 020 (Miller Indices) wurden am Böhmit bestimmt und beziehen sich auf die nicht-konventionelle kristallographische Aufstellung Amam der orthorhombischen Raumgruppe Nr. 63. Die konventionelle Aufstellung lautet Cmcn. Hierbei sind gegenüber der nicht-konventionellen Aufstellung Amam die a- und c- Achse vertauscht.

Die Oberflächengröße der erfindungsgemäßen Aluminiumoxide wurde mit Hilfe einer $N_2$-Sorptionsanalytik nach BET bestimmt (nach DIN 66131). Die Porenvolumina bzw. die Porenvolumenverteilung wurde mit Hilfe der Quecksilberintrusion (Quecksilberpenetrationsmethode) unter Verwendung eines Quecksilber-Porosimeters bestimmt (nach DIN 66 133). Die Angabe der Porenvolumina erfolgt in $cm^3/g$ als kumuliertes Volumen gemäß DIN 66 133.

Beispiel 1 (Vergleichsbeispiel)

Als Ausgangsprodukt wurde eine Tonerdeaufschlämmung aus der neutralen Aluminiumalkoholathydrolyse wie folgt hergestellt:

Es wurde ein Aluminiumalkoholatgemisch, wie es bei der Synthese des Ziegler/Alfol-Prozesses als Zwischenprodukt anfällt, mit Wasser, welches mittels einer Vollentsalzungsanlage frei von Fremdionen aufbereitet worden war, bei 90°C in einem Rührkessel hydrolysiert. Dabei bildeten sich zwei nicht mischbare Phasen, nämlich eine obere Alkoholphase und eine untere Tonerde/Wasserphase.

500g dieser 10 bis 11 Gew.-% $Al_2O_3$ enthaltenden Tonerdeaufschlämmung, welche einen pH-Wert von 9 aufwies, wurden bei absatzweisem Betrieb in einem Reaktor gegeben, und zwar bei einem Reaktordruck von 3 bar entsprechend 115°C. Es wurde nach Einstellung der Reaktionsbedingungen 4 h mit einem üblichen Rührwerk mit einer Umfangsgeschwindigkeit von 1,6 m/s entsprechend einer Rührerdrehzahl von 500 U/min. gealtert.

Im Vergleichsbeispiel wurden folgende Werte erhalten:

| Reflex | Beta | Theta | Kristallitgröße |
|---|---|---|---|
| 120 | 0,919 | 14° | 9,8 nm |
| 020 | 0,919 | 7° | 6,7 nm |

Der 120 - Reflex ist um 3,1 nm größer als der 020 - Reflex.

Die Bestimmung der spezifischen Oberfläche erfolgte über eine $N_2$-Sorptionsanalytik nach BET. Die spezifische Oberfläche nach einer Temperaturbehandlung über 3h bei 1200°C betrug 46 $m^2/g$. Das Röntgenpulverdiffraktogramm dieser Probe ist in Tabelle 1 wiedergegeben und weist deutliche Signale der Alpha-Phase auf.

Beispiel 2 (Vergleichsbeispiel)

500g der im Vergleichsbeispiel erwähnten 10 bis 11 Gew.-% $Al_2O_3$ enthaltenden Tonerdeaufschlämmung, welche einen pH-Wert von 9 aufwies, wurden bei absatzweisem Betrieb in einen Reaktor gegeben, und zwar bei Normaldruck und 98°C. Es wurde nach Einstellung der Reaktionsbedingungen 16 h mit einem üblichen Rührwerk mit einer Umfangsgeschwindigkeit von 1,6 m/s entsprechend der Rührdrehzahl von 500 U/min. gealtert. Die entsprechend dem im Vergleichsbeispiel erläuterten Verfahren enthaltenen Kristallitgrößen betrugen 13,5 nm am 120 - und 12,1 nm am 020 - Reflex.

Die spezifische Oberfläche nach einer Temperaturbehandlung über 3 h bei 1200°C betrug 68 $m^2/g$. Das Rönt-

genpulverdiffraktogramm dieser Probe ist in Tabelle 1 wiedergegeben und weist Signale der Theta-Phase auf. Das Aluminiumoxid liegt mit einer Phasenreinheit von größer als 98% in der Theta-Phase vor

Soweit eine Alterung unter oben beschriebenen Bedingungen über 20 h durchgeführt wird, werden Kristallitgrößen von 13,5 nm gemessen am 120 - und 13,0 nm gemessen am 020 - Reflex erhalten.

Beispiel 3 (Vergleichsbeispiel)

500g der im Vergleichsbeispiel erwähnten 10 bis 11 Gew.-% $Al_2O_3$ bestimmten Tonerdeaufschlämmung, welche einen pH-Wert von 9 aufwies, wurden bei absatzweisem Betrieb in einen Reaktor gegeben, und zwar bei einem Reaktordruck von 3 bar entsprechend 110°C. Es wurde nach Einstellung der Reaktionsbedingungen 40h mit einem üblichen Rührwerk mit einer Umfangsgeschwindigkeit von 1,6 m/s entsprechend der Rührdrehzahl von 500 U/min. gealtert.

Die entsprechend dem im Vergleichsbeispiel erläuterten Verfahren bestimmten Kristallitgrößen betrugen 15,3 nm am 120 - und 15,3 nm am 020 - Reflex. Die spezifische Oberfläche nach einer Temperaturbehandlung über 3 h bei 1200°C betrug 67 m$^2$/g.

Beispiel 4 (Vergleichsbeispiel)

500g der im Vergleichsbeispiel erwähnten 10 bis 11 Gew.-% $Al_2O_3$ bestimmten Tonerdeaufschlämmung, welche einen pH-Wert von 9 aufwies, wurden bei absatzweisem Betrieb in einen Reaktor gegeben, und zwar bei einem Reaktordruck von 3 bar entsprechend 110°C. Es wurde nach Einstellung der Reaktionsbedingungen 60 h mit einem üblichen Rührwerk mit einer Umfangsgeschwindigkeit von 1,6 m/s entsprechend der Rührdrehzahl von 500 U/min. gealtert.

Die entsprechend dem im Vergleichsbeispiel erläuterten Verfahren bestimmten Kristallitgrößen betrugen 16,1 nm am 120 - und 16,5 nm am 020 - Reflex. Die spezifische Oberfläche nach einer Temperaturbehandlung über 3h bei 1200°C betrug 72 m$^2$/g.

Beispiel 5 (Vergleichsbeispiel)

600g der im Vergleichsbeispiel erwähnten 10 bis 11 Gew.-% $Al_2O_3$ enthaltenden Tonerdeaufschlämmung, welche einen pH-Wert von 9 aufwies, wurden 50g 20 % wässeriger Tetrenlösung zugegeben und 68 h unter Rückfluß gekocht. Dabei wurden jeweils 300g $H_2O$ nach 1 h zugegeben. Das Gemisch wurde mit 200g $H_2O$ verdünnt und sprühgetrocknet.

Die entsprechend dem im Vergleichsbeispiel erläuterten Verfahren bestimmten Kristallitgrößen betrugen 14,4 nm am 120 - und 14,6 nm am 020 - Reflex. Die spezifische Oberfläche nach einer Temperaturbehandlung über 3h bei 1200°C betrug 81 m$^2$/g.

Beispiel 6 (Vergleichsbeispiel)

300g einer 6,02 % Aluminiumtri-n-hexanolat-Lösung in n-Hexanol wurden bei 90°C mit 360g einer 5% wäßrigen Tetrenlösung versetzt und 30 min bei 90°C gerührt. Aus der Reaktionsmischung wurde das Hexanol durch azeotrope Destillation entfernt. Der Rückstand wurde anschließend bei 90°C 24h gerührt. Dabei wurden jeweils 100g $H_2O$ nach 1h , nach 2h und nach 3h zugegeben. Das Reaktionsgemisch wurde sprühgetrocknet.

Die entsprechend dem im Vergleichsbeispiel erläuterten Verfahren bestimmten Kristallitgrößen betrugen 11,0 nm am 120 - und 11,8 nm am 020 - Reflex. Die spezifische Oberfläche nach einer Temperaturbehandlung über 3h bei 1200°C betrug 76 m$^2$/g.

Beispiel 7 (Vergleichsbeispiel)

300g einer 6,02% Aluminiumtri-n-hexanolat-Lösung in n-Hexanol wurden bei 90°C mit 360 g einer 5% wässrigen Tetrenlösung versetzt und 30 min bei 90°C gerührt. Aus der Reaktionsmischung wurde das Hexanol durch azeotrope Destillation entfernt. Der Rückstand wurde anschließend bei 90°C 68 h gerührt. Dabei wurden jeweils 100 g $H_2O$ nach 1 h , nach 2 h und nach 3 h zugegeben. Das Reaktionsgemisch wurde sprühgetrocknet.

Die entsprechend dem im Vergleichsbeispiel erläuterten Verfahren bestimmten Kristallitgrößen betrugen 12,6 nm am 120 - und 16,4 nm am 020 - Reflex. Die spezifische Oberfläche nach einer Temperaturbehandlung über 3h bei 1200°C betrug 79 m$^2$/g.

**Tabelle 1 Röntgenpulverdiffraktogramm des Beispiels 1 (Vergleichsbeispiel) mit deutlichem Anteil an Alpha-$Al_2O_3$**

| D-Wert [°2$\theta$] | d-Wert $\alpha^1$ [Å] | d-Wert $\alpha^2$ [Å] | T-Breite [°2$\theta$] | Höhe [counts] | Hintergr. [counts] | Rel.Int. [%] | Signifik. |
|---|---|---|---|---|---|---|---|
| 16.205 | 5.46527 | 5.47872 | 0.480 | 19 | 29 | 4.1 | 1.56 |
| 19.550 | 4.53706 | 4.54822 | 0.480 | 45 | 27 | 9.5 | 2.53 |
| 21.850 | 4.06440 | 4.07439 | 0.480 | 9 | 24 | 1.9 | 0.80 |
| 25.560 | 3.48224 | 3.49081 | 0.180 | 276 | 30 | 58.5 | 7.44 |
| 31.230 | 2.86174 | 2.86878 | 0.200 | 286 | 41 | 60.7 | 2.47 |
| 32.695 | 2.73678 | 2.74351 | 0.120 | 441 | 37 | 93.7 | 1.23 |
| 32.825 | 2.72624 | 2.73294 | 0.080 | 441 | 37 | 93.7 | 0.97 |
| 35.135 | 2.55211 | 2.55838 | 0.140 | 449 | 35 | 95.4 | 4.34 |
| 36.660 | 2.44937 | 2.45539 | 0.200 | 313 | 34 | 66.5 | 1.41 |
| 37.695 | 2.38446 | 2.39032 | 0.140 | 185 | 31 | 39.3 | 2.48 |
| 38.910 | 2.31275 | 2.31844 | 0.120 | 266 | 30 | 56.4 | 0.91 |
| 39.855 | 2.26007 | 2.26563 | 0.160 | 169 | 30 | 35.9 | 0.92 |
| 41.715 | 2.16349 | 2.16881 | 0.480 | 21 | 27 | 4.5 | 1.69 |
| 43.305 | 2.08767 | 2.09280 | 0.160 | 396 | 27 | 84.1 | 6.77 |
| 44.785 | 2.02205 | 2.02703 | 0.320 | 282 | 26 | 59.9 | 9.47 |
| 45.605 | 1.98758 | 1.99247 | 0.360 | 137 | 25 | 29.1 | 3.48 |
| 46.515 | 1.95080 | 1.95560 | 0.240 | 90 | 24 | 19.2 | 2.18 |
| 47.630 | 1.90770 | 1.91239 | 0.120 | 185 | 23 | 39.3 | 1.31 |
| 50.680 | 1.79981 | 1.80424 | 0.320 | 77 | 22 | 16.4 | 4.82 |
| 51.520 | 1.77242 | 1.77678 | 0.320 | 22 | 22 | 4.7 | 0.78 |
| 52.450 | 1.74317 | 1.74745 | 0.100 | 154 | 22 | 32.7 | 1.18 |
| 57.415 | 1.60366 | 1.60761 | 0.160 | 317 | 25 | 67.3 | 6.46 |
| 58.730 | 1.57085 | 1.57471 | 0.240 | 26 | 25 | 5.5 | 0.76 |
| 59.820 | 1.54480 | 1.54861 | 0.120 | 114 | 25 | 24.3 | 1.93 |
| 61.240 | 1.51234 | 1.51606 | 0.160 | 74 | 25 | 15.7 | 1.05 |
| 62.295 | 1.48924 | 1.49291 | 0.400 | 71 | 24 | 15.0 | 2.02 |
| 63.850 | 1.45667 | 1.46025 | 0.240 | 137 | 24 | 29.1 | 3.28 |
| 64.165 | 1.45028 | 1.45385 | 0.120 | 98 | 24 | 20.8 | 1.06 |
| 65.450 | 1.42488 | 1.42838 | 0.320 | 59 | 23 | 12.6 | 1.06 |
| 66.475 | 1.40537 | 1.40883 | 0.100 | 324 | 24 | 68.8 | 0.85 |
| 67.395 | 1.38841 | 1.39182 | 0.440 | 471 | 23 | 100.0 | 18.43 |
| 68.155 | 1.37477 | 1.37815 | 0.100 | 190 | 23 | 40.4 | 0.92 |
| 72.900 | 1.29654 | 1.29973 | 0.320 | 41 | 21 | 8.7 | 1.33 |
| 73.700 | 1.28443 | 1.28759 | 0.400 | 48 | 21 | 10.1 | 2.55 |
| 75.460 | 1.25878 | 1.26188 | 0.560 | 28 | 19 | 6.0 | 4.30 |
| 76.800 | 1.24012 | 1.24317 | 0.160 | 58 | 18 | 12.3 | 1.06 |

Meßparameter: Start-Winkel [°2$\theta$]: 5.010; End-Winkel [°2$\theta$]: 79.990; Start d-Wert [Å]: 17.62435; End d-Wert [Å]: 1.19850; Anoden Material: Cu; $\alpha^1$ Wellenlänge [Å]: 1.54060; $\alpha^2$ Wellenlänge [Å]: 1.54439

**Tabelle 2 Röntgenpulverdiffraktogramm des Beispiels 2 ($Al_2O_3$ mit > 98% Theta-Phase)**

| D-Wert [°2$\theta$] | d-Wert $\alpha^1$ [Å] | d-Wert $\alpha^2$ [Å] | T-Breite [°2$\theta$] | Höhe [counts] | Hintergr. [counts] | Rel.Int. [%] | Signifik. |
|---|---|---|---|---|---|---|---|
| 16.240 | 5.45357 | 5.46699 | 0.400 | 40 | 28 | 6.6 | 1.55 |

(fortgesetzt)

| D-Wert [°2θ] | d-Wert α1 [Å] | d-Wert α2 [Å] | T-Breite [°2θ] | Höhe [counts] | Hintergr. [counts] | Rel.Int. [%] | Signifik. |
|---|---|---|---|---|---|---|---|
| 19.495 | 4.54974 | 4.56093 | 0.400 | 56 | 30 | 9.4 | 1.21 |
| 25.230 | 3.52704 | 3.53571 | 0.800 | 11 | 28 | 1.8 | 1.26 |
| 31.130 | 2.87070 | 2.87777 | 0.320 | 292 | 42 | 48.7 | 4.94 |
| 32.685 | 2.73759 | 2.74433 | 0.180 | 600 | 42 | 100.0 | 3.57 |
| 32.790 | 2.72907 | 2.73578 | 0.060 | 562 | 42 | 93.6 | 0.80 |
| 34.845 | 2.57268 | 2.57901 | 0.320 | 102 | 41 | 17.0 | 2.05 |
| 36.635 | 2.45098 | 2.45701 | 0.320 | 372 | 40 | 62.1 | 5.21 |
| 38.820 | 2.31791 | 2.32361 | 0.280 | 266 | 41 | 44.3 | 4.26 |
| 39.890 | 2.25816 | 2.26372 | 0.240 | 196 | 40 | 32.7 | 1.80 |
| 43.295 | 2.08813 | 2.09326 | 0.320 | 15 | 29 | 2.5 | 1.01 |
| 44.720 | 2.02484 | 2.02982 | 0.360 | 361 | 28 | 60.1 | 12.86 |
| 46.530 | 1.95020 | 1.95500 | 0.480 | 59 | 27 | 9.9 | 0.93 |
| 47.585 | 1.90940 | 1.91410 | 0.280 | 196 | 25 | 32.7 | 5.21 |
| 50.585 | 1.80297 | 1.80741 | 0.240 | 85 | 24 | 14.1 | 2.69 |
| 51.470 | 1.77403 | 1.77839 | 0.320 | 31 | 23 | 5.2 | 1.18 |
| 52.455 | 1.74301 | 1.74730 | 0.320 | 22 | 23 | 3.7 | 1.03 |
| 56.580 | 1.62533 | 1.62933 | 0.640 | 18 | 23 | 2.9 | 0.99 |
| 57.365 | 1.60494 | 1.60889 | 0.320 | 20 | 24 | 3.4 | 0.75 |
| 58.755 | 1.57024 | 1.57410 | 0.240 | 37 | 24 | 6.2 | 2.28 |
| 59.850 | 1.54410 | 1.54790 | 0.200 | 139 | 24 | 23.2 | 1.67 |
| 62.310 | 1.48892 | 1.49258 | 0.400 | 100 | 24 | 16.7 | 2.83 |
| 63.925 | 1.45514 | 1.45872 | 0.400 | 164 | 25 | 27.3 | 10.08 |
| 65.355 | 1.42672 | 1.43023 | 0.480 | 69 | 26 | 11.5 | 2.58 |
| 66.450 | 1.40584 | 1.40930 | 0.240 | 228 | 25 | 38.0 | 2.47 |
| 67.395 | 1.38841 | 1.39182 | 0.600 | 524 | 26 | 87.4 | 39.85 |
| 72.845 | 1.29738 | 1.30057 | 0.480 | 50 | 24 | 8.4 | 2.92 |
| 73.715 | 1.28420 | 1.28736 | 0.400 | 64 | 23 | 10.7 | 3.36 |
| 75.295 | 1.26113 | 1.26423 | 0.400 | 27 | 20 | 4.5 | 1.56 |
| 77.320 | 1.23308 | 1.23611 | 0.960 | 15 | 18 | 2.5 | 3.48 |

Meßparameter wie in Tabelle 1

**Tabelle 3 Röntgenpulverdiffraktogramm eines erfindungsgemäßen Aluminiumoxides in der Delta-Phase**

| D-Wert [°2θ] | d-Wert α1 [Å] | d-Wert α2 [Å] | T-Breite [°2θ] | Höhe [counts] | Hintergr. [counts] | Rel.Int. [%] | Signifik. |
|---|---|---|---|---|---|---|---|
| 19.605 | 4.52446 | 4.53559 | 0.480 | 21 | 49 | 6.2 | 0.82 |
| 32,855 | 2.72382 | 2.73052 | 0.560 | 69 | 139 | 20.3 | 2.95 |
| 36.865 | 2.43621 | 2.44221 | 0.320 | 114 | 132 | 33.8 | 0.95 |
| 39.570 | 2.27568 | 2.28128 | 0.880 | 117 | 90 | 34.5 | 10.25 |
| 45,475 | 1.99296 | 1.99787 | 0.560 | 272 | 58 | 80.4 | 7.14 |
| 46,385 | 1.95596 | 1.96077 | 0.480 | 146 | 56 | 43.2 | 2.24 |
| 50.865 | 1.79370 | 1.79811 | 0.800 | 10 | 40 | 3.0 | 1.35 |
| 58.990 | 1.56455 | 1.56839 | 0.140 | 11 | 61 | 3.2 | 0.85 |
| 59.985 | 1.54095 | 1.54474 | 0.800 | 18 | 74 | 5.5 | 1.38 |
| 66.470 | 1.40547 | 1.40892 | 0.560 | 279 | 83 | 82.4 | 3.34 |

(fortgesetzt)

| D-Wert [°2θ] | d-Wert α1 [Å] | d-Wert α2 [Å] | T-Breite [°2θ] | Höhe [counts] | Hintergr. [counts] | Rel.Int. [%] | Signifik. |
|---|---|---|---|---|---|---|---|
| 67.220 | 1.39160 | 1.39502 | 0.240 | 339 | 76 | 100.0 | 0.99 |

Meßparameter wie in Tabelle 1

## Patentansprüche

1. Kristalline böhmitische oder pseudo-böhmitische Tonerde oder beide deren Kristallitgröße bestimmt am 020 - Reflex in nm größer als die um 1,5 nm verminderte, gemessene Kristallitgröße bestimmt am 120 - Reflex ist, enthaltend Oxide oder Oxidhydrate des Zirkoniums, Titans, Lanthans oder Bors einschließlich deren Mischungen.

2. Tonerde gemäß Anspruch 1, **dadurch gekennzeichnet, daß** deren Kristallitgröße bestimmt am 020 - Reflex in nm größer als die um 0,5 nm verminderte, gemessene Kristallitgröße bestimmt am 120 - Reflex ist.

3. Tonerde gemäß Anspruch 2, **dadurch gekennzeichnet, daß** die Kristallitgröße bestimmt in nm am 020 - Reflex größer als die Kristallitgröße bestimmt in nm am 120 - Reflex ist.

4. Tonerde gemäß einem der vorhergehenden Ansprüche, **dadurch gekennzeichnet, daß** die Kristallitgröße gemessen am 020 - Reflex 10 bis 50 nm beträgt.

5. Tonerde gemäß einem der vorhergehenden Ansprüche, **dadurch gekennzeichnet, daß** die Tonerde die Oxide in Mengen von 0,1 bis 5 Gew.% , vorzugsweise 0,2 bis 2 Gew.%, jeweils bezogen auf $Al_2O_3$, als Zusatz enthält.

6. Tonerde gemäß einem der vorhergehenden Ansprüche, **dadurch gekennzeichnet, daß** die Tonerde Oxide des Lanthans enthält.

7. Verfahren zur Herstellung kristalliner böhmitischer oder pseudo-böhmitischer Tonerde oder beiden, deren Kristallitgröße bestimmt am 020 - Reflex in nm größer als die um 1,5 nm verminderte, insbesondere größer als die um 0,5 nm verminderte, gemessene Kristallitgröße bestimmt am 120 - Reflex ist, **dadurch gekennzeichnet, daß** man eine böhmitische oder pseudo-böhmitische Tonerde oder beide einer hydrothermalen Langzeitalterung in Gegenwart von Wasser und Oxiden oder Oxidhydraten des Zirkoniums, Titans, Lanthans oder Bors einschließlich deren Mischungen bei 40 bis 240°C für mindestens 8 h aussetzt.

8. Verfahren zur Herstellung kristalliner böhmitischer oder pseudo-böhmitischer Tonerde oder beiden gemäß Anspruch 7, **dadurch gekennzeichnet, daß** man böhmitische oder pseudo-böhmitische Tonerde oder beide einer hydrothermalen Langzeitalterung in Gegenwart von Wasser und Oxiden oder Oxidhydraten des Zirkoniums, Titans, Lanthans oder Bors einschließlich deren Mischungen bei 60 bis 240°C über zumindest 10 h aussetzt.

9. Verfahren zur Herstellung kristalliner böhmitischer oder pseudo-böhmitischer Tonerde oder beiden gemäß einem der Ansprüche 7 oder 8, **dadurch gekennzeichnet, daß** die Ausgangsverbindung zur Herstellung der kristallinen böhmitischen oder pseudo-böhmitischen Tonerden oder beiden durch Hydrolyse von Aluminiumalkoxiden von C1 bis C24+ Alkoholen oder deren Gemischen zugängliche Aluminiumoxidhydrate bzw. Aluminiumoxidhydroxide in Form böhmitischer oder pseudo-böhmitischer Tonerde oder in Form von beiden sind.

10. Aluminiumoxid herstellbar aus einer kristallinen böhmitischen oder pseudo-böhmitischen Tonerde oder beiden gemäß einem der Ansprüche 1 bis 3 durch eine Temperaturbehandlung, vorzugsweise durch Calcinieren bei einer Temperatur von 800 bis 1500°C für zumindest 0,5 h,
wobei das Aluminiumoxid in der Theta- oder Delta-Phase vorliegt,
das Aluminiumoxid nach einer Temperaturbehandlung durch Calcinierung bei 1200°C über 3 h eine Oberfläche von größer 60 m$^2$/g aufweist und
das Aluminiumoxid ein Porenvolumen bestimmt mit Hilfe der Quecksilberpenetrationsmethode im Porenradienbereich von 1,8 bis 100 nm von größer 0,6 cm$^3$/g aufweist.

11. Verwendung der Aluminiumoxide gemäß Anspruch 10 als Katalysator oder Katalysatorträgermaterial.

**Claims**

1. Crystalline boehmitic alumina or pseudo boehmitic alumina or both having a crystallite size, determined on the 020 reflex in nm, that is larger than the measured crystallite size determined on the 120 reflex reduced by 1.5 nm, comprising oxides or oxide hydrates of zirconium, titanium, lanthanum or boron including mixtures thereof.

2. The alumina according to claim 1, **characterized in that** the crystallite size determined on the 020 reflex in nm is greater than the measured crystallite size determined on the 120 reflex reduced by 0,5 nm.

3. The alumina according to claim 2, **characterized in that** the crystallite size determined on the 020 reflex in nm is greater than the crystallite size determined in nm on the 120 reflex.

4. The alumina according to one of the preceding claims, **characterized in that** the crystallite size determined on the 020 reflex is from 10 to 50 nm.

5. The alumina according to one of the preceding claims, **characterized in that** the alumina comprises the oxides as additive in the amount of 0.1 to 5 % by weight, preferably 0.2 to 2 % by weight, relative to $Al_2O_3$ respectively.

6. The alumina according to one of the preceding claims, **characterized in that** the alumina comprises oxides of lanthanum.

7. A method of preparing crystalline boehmitic alumina or pseudo boehmitic alumina or both, having a crystallite size that, determined on the 020 reflex in nm, is larger than the measured crystallite size determined on the 120 reflex reduced by 1.5 nm, in particular is larger than the measured crystallite size determined on the 120 reflex reduced by 0,5 nm, **characterized in that** boehmitic alumina or pseudo boehmitic alumina or both are exposed to hydrothermal long term aging in the presence of water and oxides or oxide hydrates of zirconium, titanium, lanthanum or boron including mixtures thereof at 40 to 240°C for at least 8 h.

8. A method of preparing crystalline boehmitic alumina or pseudo boehmitic alumina or both according to claim 7, **characterized in that** boehmitic alumina or pseudo boehmitic alumina or both are exposed to hydrothermal long term aging in the presence of water and oxides or oxide hydrates of zirconium, titanium, lanthanum or boron including mixtures thereof at 60 to 240°C for at least 10 h.

9. A method of preparing crystalline boehmitic alumina or pseudo boehmitic alumina or both according to one of claims 7 or 8, **characterized in that** the starting material for the production of the crystalline boehmitic alumina or pseudo boehmitic alumina or both are aluminium oxide hydrates and/or aluminium oxide hydrates in the form of boehmitic or pseudo boehmitic alumina or in the form of both obtainable by hydrolysis of alumina alkoxides of C1 to C24+ alcohols or their mixtures.

10. Aluminium oxide obtainable from a crystalline boehmitic alumina or a pseudo boehmitic alumina or both according to one of claims 1 to 3 by thermal treatment, preferably by calcination at a temperature of from 800 to 1500°C for at least 0.5 h,
wherein the aluminium oxide is present in the theta or delta phase,
the aluminium oxide after thermal treatment by calcination at 1200°C for 3 h comprises a surface area of greater than 60 $m^2$/g and
the aluminium oxide has a pore volume of greater than 0.6 $cm^3$/g determined by the mercury penetration method in the pore radius range of from 1.8 to 100 nm.

11. Use of the aluminium oxide according to claim 10 as catalyst or catalyst carier material.

**Revendications**

1. Alumine boehmitique ou pseudo-boehmitique cristalline ou les deux, dont la taille des cristallites déterminée à une réflexion de 020 en nm est supérieure à la taille des cristallites mesurée et réduite de 1,5 nm, déterminée à une réflexion de 120, comprenant des oxydes ou des oxyhydrates de zirconium, de titane, de lanthane ou de bore, y compris leurs mélanges.

**2.** Alumine selon la revendication 1, **caractérisée en ce que** la taille de ses cristallites déterminée à une réflexion de 020 en nm est supérieure à la taille des cristallites mesurée et réduite de 0,5 nm, déterminée à une réflexion de 120.

**3.** Alumine selon la revendication 2, **caractérisée en ce que** la taille des cristallites déterminée en nm à une réflexion de 020 est supérieure à la taille des cristallites déterminée en nm à une réflexion de 120.

**4.** Alumine selon l'une des revendications précédentes, **caractérisée en ce que** la taille des cristallites mesurée à une réflexion de 020 est de 10 à 50 nm.

**5.** Alumine selon l'une des revendications précédentes, **caractérisée en ce que** l'alumine renferme les oxydes en des quantités de 0,1 à 5 % en poids, de préférence 0,2 à 2 % en poids, respectivement par rapport à $Al_2O_3$, en tant qu'additifs.

**6.** Alumine selon l'une des revendications précédentes, **caractérisée en ce que** l'alumine renferme des oxydes de lanthane.

**7.** Procédé de production d'alumine boehmitique ou pseudo-boehmitique cristalline ou des deux, dont la taille des cristallites déterminée en nm à une réflexion de 020 est supérieure à la taille des cristallites mesurée et réduite de 1,5 nm, en particulier supérieure à la taille des cristallites mesurée et réduite de 0,5 nm, déterminée à une réflexion de 120, **caractérisé en ce que** l'on soumet une alumine boehmitique ou pseudo-boehmitique ou les deux à un vieillissement hydrothermique à long terme en présence d'eau et d'oxydes ou d'oxyhydrates de zirconium, de titane, de lanthane ou de bore, y compris leurs mélanges, à une température de 40 à 240°C pendant au moins 8 h.

**8.** Procédé de production d'alumine boehmitique ou pseudo-boehmitique cristalline ou des deux selon la revendication 7, **caractérisé en ce que** l'on soumet une alumine boehmitique ou pseudo-boehmitique ou les deux à un vieillissement hydrothermique à long terme en présence d'eau et d'oxydes ou d'oxyhydrates de zirconium, de titane, de lanthane ou de bore, y compris leurs mélanges, à une température de 60 à 240°C pendant au moins 10 h.

**9.** Procédé de production d'alumine boehmitique ou pseudo-boehmitique cristalline ou des deux selon l'une des revendications 7 ou 8, **caractérisé en ce que** les composés de départ pour la production des alumines boehmitiques ou pseudo-boehmitiques cristallines ou les deux sont des oxyhydrates d'aluminium ou oxyhydroxydes d'aluminium, accessibles par hydrolyse des alcoxydes d'aluminium d'alcools en C1 à C24+ ou leurs mélanges, sous la forme d'alumine boehmitique ou pseudo-boehmitique ou sous la forme des deux.

**10.** Oxyde d'aluminium pouvant être fabriqué à partir d'une alumine boehmitique ou pseudo-boehmitique cristalline ou des deux selon l'une des revendications 1 à 3 par traitement thermique, de préférence par calcination à une température de 800 à 1500°C pendant au moins 0,5 h,
dans lequel l'oxyde d'aluminium se présente en phase thêta ou delta,
l'oxyde d'aluminium présente une surface supérieure à 60 $m^2$/g après un traitement thermique par calcination à 1200°C pendant 3 h et
l'oxyde d'aluminium présente un volume de pores déterminés à l'aide de la méthode de pénétration du mercure dans la plage des rayons de pores de 1,8 à 100 nm qui sont supérieurs à 0,6 $cm^3$/g.

**11.** Utilisation des oxydes d'aluminium selon la revendication 10 comme catalyseur ou matériau support catalytique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3823895 C1
- US 3898322 A
- US 4061594 A
- US 4797139 A